(19) Europäisches Patentamt
European Patent Office
Office européen des brevets

(11) **EP 2 510 330 B1**

(12) **FASCICULE DE BREVET EUROPEEN**

(45) Date de publication et mention
de la délivrance du brevet:
**02.09.2015 Bulletin 2015/36**

(21) Numéro de dépôt: **10805440.4**

(22) Date de dépôt: **07.12.2010**

(51) Int Cl.:
***G01N 1/28*** *(2006.01)*

(86) Numéro de dépôt international:
**PCT/FR2010/000816**

(87) Numéro de publication internationale:
**WO 2011/070248 (16.06.2011 Gazette 2011/24)**

(54) **PROCEDE DE PREPARATION D'UNE CAROTTE DE CHARBON**

VERFAHREN ZUR HERSTELLUNG EINES KOHLENSTOFFKERNS

CARBON CORE PREPARATION METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.12.2009 FR 0905934**

(43) Date de publication de la demande:
**17.10.2012 Bulletin 2012/42**

(73) Titulaire: **BRGM
75015 Paris (FR)**

(72) Inventeurs:
• **DEFOSSEZ, Pierrick
F-45000 Orleans (FR)**
• **GAUCHER, Eric
F-45160 Olivet (FR)**

(74) Mandataire: **de la Bigne, Guillaume Michel Marie
LLR
11 boulevard de Sébastopol
75001 Paris (FR)**

(56) Documents cités:
**EP-A1- 0 701 120      FR-A1- 2 779 714
US-A- 2 864 677      US-A- 3 604 641
US-A- 5 193 883      US-A- 5 413 004
US-A- 5 817 946      US-A1- 2009 295 034**

• **BENSON ET AL: "effect of sulfur in the briquetting
of sub-bituminous coal", INDUSTRIAL AND
ENGINEERING CHEMISTRY, vol. 18, no. 2, 1
février 1926 (1926-02-01), pages 116-117,
XP002591470,**

## Description

La présente invention concerne notamment un procédé de préparation d'une carotte de charbon. La présente invention concerne également un procédé de mesure d'adsorption du $CO_2$ comprenant l'utilisation de la carotte de charbon selon l'invention.

Le stockage du $CO_2$ dans les veines de charbon représente un réel challenge scientifique compte tenu de la chimie et de la structure complexe des charbons. Les « macéraux » du charbon, équivalents structuraux des minéraux des roches, ont des origines organiques variées et se comportent donc différemment. Chacun s'inscrit dans une gamme de porosité spécifique et voue une affinité propre aux gaz. Ainsi, la composition du charbon, et particulièrement sa fraction organique, semble déterminante pour la capacité d'adsorption des gaz.

La compréhension des processus d'injection de $CO_2$ dans le charbon ne s'arrête pas à la modélisation du transport ou de l'adsorption. Il a été montré que le $CO_2$ est un solvant organique pouvant interagir avec la matrice du charbon qu'il modifie alors physiquement et chimiquement. Ces changements sont associés à la relaxation, au réarrangement des structures macromoléculaires du charbon qui entraînent un gonflement du matériau et ainsi un redimensionnement poral. L'augmentation de volume par adsorption de $CO_2$ à 15 atm peut atteindre 4% pour certains charbons. Il a été remarqué qu'une corrélation existe entre une teneur en $CO_2$ plus faible et une augmentation du gonflement.

Par ailleurs, dans un charbon en place sous contrainte lithostatique, le mouvement des macromolécules est très lent. La percolation de $CO_2$ agit comme un plastifiant, ce qui favorise le réarrangement des molécules, modifie la structure du charbon et conduit à une réduction de sa perméabilité.

La compréhension de l'ensemble de ces mécanismes et phénomènes complexes est indispensable pour trouver les moyens techniques adéquats pour contourner les difficultés et pour rendre accessible le grand potentiel de stockage du $CO_2$ des gisements houillers.

Dans cette perspective, il est indispensable de connaître le comportement chimique et mécanique du charbon lors de la percolation de $CO_2$.

La science de la mécanique des roches s'est développée au milieu du siècle dernier. Ses essais sont réalisés sur le charbon comme sur toute autre roche. Ils nécessitent un échantillon issu du forage du matériau appelé « carotte ».

L'essai classique pratiqué sur le charbon, dans le cadre d'une étude sur le stockage du $CO_2$, consiste en une percolation de gaz dans une éprouvette du matériau soumise à des contraintes verticale et latérale données. On étudie, au fil de l'expérience, l'évolution morpho-structurale de la carotte, notamment l'évolution de son indice des vides, son gonflement et sa fracturation.

Malheureusement, le matériau, dans la majeure partie des cas, ne se prête que très difficilement au carottage. Le charbon est de nature friable. Il n'est pas rare d'avoir à forer plusieurs dizaines de blocs avant de parvenir à extraire une carotte solide. Il est des cas extrêmes où un échantillon se voit rejeté car l'essai ne peut être réalisé. Or, il n'y a pas de lien connu entre la facilité d'un charbon à être carotté et sa capacité à stocker du gaz, donc aucun échantillon ne doit être écarté sous ce prétexte. De plus, la carotte obtenue avec plus ou moins de chance n'est pas nécessairement représentative du matériau; preuve en est la faible répétabilité de l'expérience qui est le reflet de l'hétérogénéité du matériau. Par ailleurs, les essais mécaniques *in situ,* à grande échelle, sont longs et coûteux.

La demande US2009/295034 décrit un procédé de préparation permettant d'obtenir un monolithe de charbon activé utilisable pour le stockage du gaz naturel. Le procédé décrit comprend une première étape qui consiste à activer de la poudre de charbon par chauffage en présence d'hydroxyde de potassium. Ensuite la poudre de charbon activé est moulée en présence d'un liant (du polytétrafluoroéthylène ou PTFE).

Lozano-Castello et al.(2002) a également décrit un procédé de préparation permettant d'obtenir un monolithe de charbon activé utilisable pour le stockage du méthane. Le procédé décrit consiste à mouler à chaud un mélange comprenant de la poudre de charbon et un liant. Parmi les liants décrits figurent les sels de sodium dérivés de l'acide Humique (HAS), le poly(alcool vinylique), les résines phénoliques, du « waterlink sutcliff carbon », des liants à base de cellulose et le téflon.

La présente invention propose de résoudre le problème précédent en permettant la préparation d'une carotté de charbon, utilisable notamment dans le cadre d'une étude sur le stockage du $CO_2$, à partir d'un échantillon de charbon. La carotte de charbon, obtenue par le procédé selon l'invention, présente des propriétés d'adsorption du CO2 similaire à celle du charbon à partir duquel elle a été préparée. De façon avantageuse, le procédé selon l'invention opère à température ambiante et ne nécessite pas l'utilisation de liant. Ceci permet d'obtenir un procédé économe en consommation d'énergie et un produit final ne contenant que des composants présents nativement dans l'échantillon de charbon utilisé pour produire la carotte de charbon selon l'invention.

Le procédé selon l'invention permet la création d'une carotte à partir de la roche initiale non carottable. Ensuite, l'utilisation des carottes obtenues par le procédé selon l'invention permet de comparer aisément les comportements physiques de plusieurs charbons lors de la percolation de gaz, qu'ils soient ou non carottables.

Ainsi, la présente invention propose un procédé de préparation d'une carotte de charbon tel que défini dans la revendication 1.

Le broyage effectué à l'étape (i) peut être mis en oeuvre par tous les moyens connus de l'art antérieur. Parmi les moyens envisageables, on peut notamment citer les concasseurs ou les broyeurs à anneaux. Le déposant a pu mettre en évidence que la granulométrie souhaitée pouvait être aisément atteinte en utilisant un broyeur à cylindre. Ainsi, selon un mode de réalisation préféré de l'invention, l'étape (i) est effectuée grâce à un broyeur à cylindres.

Lors de l'étape (ii), de l'eau est additionnée à la poudre obtenue à l'étape (i) afin d'obtenir un mélange comprenant de 15 à 30% d'eau (poids/poids). Les études menées par les déposants ont permis de mettre en évidence qu'une quantité inférieure d'eau ne permet pas d'obtenir un bloc ayant une cohésion suffisante et qu'une quantité supérieure d'eau entraîne des problèmes de saturation et une expulsion d'eau lors de l'étape (iv). Selon un mode de réalisation préféré de l'invention, ledit mélange comprend entre 20 et 30% d'eau et de façon tout à fait préférée entre 23 et 27% d'eau.

Le mélange obtenu à l'étape (ii) est ensuite placé dans un moule. Ce moule est de préférence cylindrique. Parmi les moules utilisables dans le cadre de la présente invention, on peut citer les cellules oedométriques classiques utilisées lors des essais géomécaniques. Selon un mode de réalisation préféré de l'invention, ledit cylindre à un diamètre intérieur compris entre 10 et 100 mm et de façon tout à fait préférée entre 40 et 60 mm.

Selon l'invention, le mélange placé dans le moule ne comprend pas de liant et notamment pas de polytétrafluoroéthylène ou PTFE, de sels de sodium dérivés de l'acide Humique (HAS), le poly(alcool vinylique), de résines phénoliques, d « waterlink sutcliff carbon » ou de liants à base de cellulose et le téflon.

Selon l'invention, le mélange placé dans le moule ne comprend que de l'eau et que la poudre obtenue à l'étape (i).

Lors de l'étape (iv) le mélange présent dans le moule est compacté. Ce compactage peut être réalisé indifféremment en une ou plusieurs étapes. Il est possible, par exemple, de réaliser un premier compactage manuel et un second compactage à l'aide d'une presse. La pression appliquée lors de cette étape (iv) est supérieure ou égale à 0.5 MPa, une pression inférieure ne permet pas d'obtenir un bloc présentant une cohésion suffisante. Selon un mode de réalisation préféré de l'invention, la pression appliquée à l'étape (iv) est supérieure ou égale à 0.9 Mpa et selon un mode de réalisation tout à fait préféré supérieure ou égale à 1 MPa. Cette étape peut être réalisée grâce à une presse. Parmi les presses utilisables dans le cadre de la présente invention, on peut citer les presses de type MECMAN. Par souci de clarté, il est précisé que les différentes indications de pressions présentes dans cette demande correspondent à la pression mesurée à 20°C.

Selon un mode de réalisation de l'invention, le procédé comprend une étape supplémentaire (iv') dans laquelle le bloc obtenu à l'étape (iv) est placé dans une trousse coupante utilisable lors d'un essai oedométrique.

L'essai oedométrique est bien connu de l'homme de l'art. Il permet notamment de mesurer et de déterminer les paramètres de consolidation des matériaux argileux et leurs caractéristiques de gonflement. L'essai de compressibilité réalisé avec un oedomètre permet l'évaluation des tassements d'un sol, d'un ouvrage, ainsi que leur évolution dans le temps. Les mesures permettent d'établir des courbes de compressibilité (chargement et déchargement), et des courbes de consolidation.

L'oedomètre comprend un cylindre métallique indéformable, dans lequel on place l'échantillon à tester, entre deux pierres poreuses destinées à permettre la consolidation du sol par dissipation des pressions interstitielles. L'échantillon est prélevé au moyen d'une trousse coupante puis est placée sous eau de manière à éviter la dessiccation du sol. Ladite trousse coupante permet d'obtenir un échantillon ayant un format compatible avec ledit cylindre métallique.

Dans le cadre de la présente invention, le bloc obtenu à l'étape (iv) va subir une consolidation en condition oedométrique qui va permettre de modifier sa structure et ses propriétés mécaniques afin de les rapprocher de celle du charbon dont est issu l'échantillon utilisée à l'étape (i).

Lors de l'étape (v), le bloc obtenu à l'étape (iv) va subir une série de palier de pression suivant un plan de charge. L'homme du métier est capable de déterminer, en fonction de l'oedomètre utilisé, le plan de charge qui permet d'obtenir une carotte de charbon ayant l'indice des vides souhaité.

Les essais menés par le déposant ont permis de mettre en évidence qu'il est avantageux que la consolidation en condition oedométrique effectué à l'étape (v) comprenne au moins un palier de pression supérieur à 80 Mpa, de façon encore plus avantageuse supérieure à 90 Mpa et de façon tout à fait avantageuse supérieure à 100 Mpa.

L'indice des vides est le rapport entre le volume des vides et le volume des phases solides dans un échantillon.

Le procédé d'obtention de l'indice des vides s'appuie sur plusieurs normes AFNOR :

- La norme NF P 94-053 qui permet la détermination du poids volumique d'un bloc de charbon. En résumé, ledit bloc de charbon est pesé puis recouvert d'une couche de paraffine. Une deuxième pesée permet de déterminer la masse de paraffine. Une troisième pesée, hydrostatique, de l'échantillon recouvert de paraffine permet de calculer le volume de l'échantillon recouvert de paraffine. Le volume de paraffine étant connu, on en déduit le volume total de l'échantillon Vt.

- La norme NF P 94-054 qui permet la détermination du poids volumique des particules solides. En résume, cet essai permet d'obtenir, entre autres, la masse volumique des grains par pycnométrie hélium ps. Cette masse volumique est le résultat de la division de la masse d'un échantillon de charbon par son volume $\rho s = ms / Vs$. Ainsi peut-on connaître précisément le volume de solide dans un échantillon de charbon Vs.

L'indice des vides e est défini comme étant le quotient : Vv/Vs avec Vv le volume des vides égal à Vt (obtenu grâce à La norme NF P 94-053) auquel on soustrait Vs (obtenu grâce à la norme NF P 94-054)).

$$Vv = (Vt-Vs)/Vs$$

$$e = Vv/Vs$$

Dans le cadre de la présente invention, le terme similaire signifie que le ratio entre l'indice des vides de la carotte obtenue après l'étape (v) et l'indice des vides du charbon dont est issu l'échantillon utilisé à l'étape (i) est compris entre 0.9 et 1.

Afin de permettre l'utilisation de la carotte de charbon, obtenue à l'étape (v), dans un procédé de mesure d'adsorption du $CO_2$, le procédé selon l'invention peut comprendre avantageusement une étape (v') consistant à éliminer l'eau présente dans la carotte obtenue à l'étape (v). Selon un mode de réalisation préféré de l'invention, ladite étape (v') comprend une étape consistant à faire passer un flux de gaz à travers la carotte de charbon obtenue à l'étape (v). Parmi les gaz utilisables dans le cadre de l'étape (v'), son peut notamment citer l'azote.

Selon un mode de réalisation préféré de l'invention, les étapes du procédé selon l'invention sont réalisées à une température inférieure à 100°C et selon un mode réalisation encore plus préféré à température ambiante.

La présente invention concerne également une carotte de charbon remarquable en ce qu'elle est obtenue par un procédé selon l'invention.

La présente invention concerne également un procédé de mesure de la capacité d'adsorption de $CO_2$ d'un charbon remarquable en ce qu'il comprend l'utilisation d'une carotte de charbon selon l'invention. La présente invention concerne également un procédé de mesure de la perméabilité à l'eau d'un charbon remarquable en ce qu'il comprend l'utilisation d'une carotte de charbon selon l'invention. La présente invention concerne également un procédé de mesure de la perméabilité à l'azote d'un charbon remarquable en ce qu'il comprend l'utilisation d'une carotte de charbon selon l'invention. La présente invention concerne également un procédé de mesure de la perméabilité au $CO_2$ gazeux d'un charbon remarquable en ce qu'il comprend l'utilisation d'une carotte de charbon selon l'invention. La présente invention concerne également un procédé de mesure de la perméabilité au $CO_2$ supercritique d'un charbon remarquable en ce qu'il comprend l'utilisation d'une carotte de charbon selon l'invention.

La présente invention concerne également l'utilisation d'une carotte de charbon selon l'invention pour la mesure de la capacité d'adsorption de CO2.

Exemple :

Phase de broyage

- Les blocs de charbon sont d'abord concassés grossièrement au marteau et ensuite placés dans un broyeur à cylindres surmonté d'une jarre de 10L remplie à 45% par des billes de téflon (soit environ 20Kg). Le volume d'échantillon introduit est égal à 40% du volume de billes. La durée du broyage est d'une dizaine de minutes à vitesse maximale (300rpm).

Cette méthode permet d'obtenir 2kg d'échantillon dont là granulométrie s'échelonne de 1 $\mu$m à environ 800$\mu$m ; vaste étendue qui garantit une bonne cohésion du bloc après la phase de moulage.

Phase de moulage

- 20 à 30% d'eau (poids/poids) est ajouté à la poudre.
- Le mélange est ensuite homogénéisé et placé dans un moule (diamètre = 50mm, H= 300mm). Le contenu du moule est tassé à la main puis avec une petite presse MECMAN de 2t avec une force de 2000daN, soit une contrainte de préconsolidation de 10MPa.
- Le bloc obtenu est placé dans une trousse coupante utilisée lors d'un essai oedométrique (H = 25mm, diam = 50mm). La surface de l'éprouvette est arasée pour obtenir un cylindre parfait.
- Finalement, l'éprouvette est placée sous presse pour recompacter les couches superficielles du bloc.

Essai oedométrique

- L'échantillon ainsi préparé est étudié comme n'importe quelle carotte de roche au cours d'un essai oedométrique classique. La densité du bloc naturel et celle de l'échantillon sont comparées par des mesures vitesses de traversée des ondes P. Celui-ci est précisément décrit dans la norme AFNOR XP P94-090-1 de décembre 1997.

A l'issue de cet essai, l'échantillon présente le même indice des vides qu'un bloc de charbon naturel. Il a une densité équivalente à la mesure de vitesse du son. La carotte obtenue a une teneur en eau entre 10 et 15% et celle-ci peut être évacuée par un courant de gaz sec (type azote) avant de mesurer la perméabilité au $CO_2$.

**Revendications**

1. Procédé de préparation d'une carotte de charbon, comprenant les étapes consistant à :

   - à mesurer l'indice des vides de l'échantillon de charbon utilisé à l'étape (i),
   - (i) broyer un échantillon de charbon pour obtenir une poudre ayant une granulomérie comprise entre 0,1 et 800 $\mu$m,
   - (ii) additionner de l'eau, à la poudre obtenue à l'étape (i), de façon à obtenir un mélange comprenant de 20 à 30% d'eau,
   - (iii) placer le mélange, obtenu à l'étape (ii), dans un moule,
   - (iv) appliquer au mélange, compris dans ledit moule, une pression supérieure à 0.5 Mpa, afin d'obtenir un bloc,
   - (v) appliquer au bloc, obtenu à l'étape (iv), une consolidation en condition oedométrique de façon à obtenir un échantillon ayant un indice de vide similaire à celui du charbon dont est issu l'échantillon utilisée à l'étape (i), et où le mélange placé dans ledit moule à l'étape (iii) ne comprend que de l'eau et que la poudre obtenue à l'étape (i).

2. Procédé de préparation d'une carotte de charbon selon la revendication 1, où l'étape (i) est effectuée grâce à un broyeur à cylindres.

3. Procédé de préparation d'une carotte de charbon selon l'une des revendications précédentes, où la pression appliquée à l'étape (iv) est supérieure ou égale à 1 Mpa.

4. Procédé de préparation d'une carotte de charbon selon l'une des revendications précédentes, comprenant en outre une étape (iv') consistant à placer le bloc obtenu à l'étape (iv) dans une trousse coupante utilisable lors d'un essai oedométrique.

5. Procédé de préparation d'une carotte de charbon selon l'une des revendications précédentes, comprenant en outre une étape (v') consistant à éliminer l'eau présente dans la carotte obtenue à l'étape (v).

6. Procédé de préparation d'une carotte de charbon selon l'une des revendications précédentes, l'étape (v') comprenant une étape consistant à faire passer un flux de gaz à travers la carotte de charbon obtenue à l'étape (v).

7. Carotte de charbon obtenue par un procédé selon l'une des revendications 1 à 6.

8. Procédé de mesure de la capacité d'adsorption de $CO_2$ d'un charbon, comprenant l'utilisation d'une carotte de charbon selon la revendication 7 ou obtenue par un procédé selon l'une des revendications 1 à 6.

9. Utilisation d'une carotte de charbon selon la revendication 7 pour la mesure de la capacité d'adsorption de $CO_2$ d'un échantillon de charbon.

10. Utilisation d'une carotte de charbon selon la revendication 7 pour la mesure de la perméabilité à l'eau d'un échantillon de charbon.

11. Utilisation d'une carotte de charbon selon la revendication 7 pour la mesure de la perméabilité à l'azote d'un échantillon de charbon.

12. Utilisation d'une carotte de charbon selon la revendication 7 pour la mesure de la perméabilité au $CO_2$ gazeux d'un échantillon de charbon.

13. Utilisation d'une carotte de charbon selon la revendication 7 pour la mesure de la perméabilité au $CO_2$ supercritique d'un échantillon de charbon.

**Patentansprüche**

1. Verfahren zur Herstellung eines Kohleprobekerns, das die folgenden Schritte umfasst:

   - Messen des Hohlraumverhältnisses der in Schritt (i) verwendeten Kohleprobe,

   (i) Zerkleinern einer Kohleprobe, um ein Pulver mit einer Granulometrie zu erhalten, die zwischen 0,1 und 800 $\mu$m steht,
   (ii) Zugeben von Wasser zu dem in Schritt (i) erhaltenen Pulver, so dass ein Gemisch erhalten wird, das 20 bis 30 % Wasser enthält,
   (iii) Platzieren des in Schritt (ii) erhaltenen Gemisches in einer Form,
   (iv) Beaufschlagen des in der Form enthaltenen Gemisches mit einem Druck über 0,5 MPa, um einen Block zu erhalten,
   (v) Aufbringen auf den in Schritt (ii) erhaltenen Block einer Verfestigung unter oedometrischen Bedingungen, so dass eine Probe mit einem Hohlraumverhältnis erhalten wird, das dem der Kohle, die der in Schritt (i) verwendeten Probe entstammt, ähnlich ist,

   und wobei das in Schritt (iii) in der Form platzierte Gemisch nur Wasser und das in Schritt (i) erhaltene Pulver enthält.

2. Verfahren zur Herstellung eines Kohleprobekerns nach Anspruch 1, wobei Schritt (i) mit Hilfe eines Walzenzerkleinerers durchgeführt wird.

**3.** Verfahren zur Herstellung eines Kohleprobekerns nach einem der vorhergehenden Ansprüche, wobei der in Schritt (iv) beaufschlagte Druck größer oder gleich 1 MPa ist.

**4.** Verfahren zur Herstellung eines Kohleprobekerns nach einem der vorhergehenden Ansprüche, umfassend ferner einen Schritt (iv') des Platzierens des in Schritt (iv) erhaltenen Blocks in einem Senkschneidenring, der bei einem Oedometerversuch verwendbar ist.

**5.** Verfahren zur Herstellung eines Kohleprobekerns nach einem der vorhergehenden Ansprüche, umfassend ferner einen Schritt (v') des Entfernens des Wassers, das in dem in Schritt (v) erhaltenen Bohrkern vorhanden ist.

**6.** Verfahren zur Herstellung eines Kohleprobekerns nach einem der vorhergehenden Ansprüche, wobei Schritt (v') einen Schritt des Durchleitens eines Gasstroms durch den in Schritt (v) erhaltenen Kohleprobekern umfasst.

**7.** Kohleprobekern, der durch ein Verfahren nach einem der Ansprüche 1 bis 6 erhalten wird.

**8.** Verfahren zum Messen des $CO_2$-Adsorptionsvermögens einer Kohle, das die Verwendung eines Kohleprobekerns nach Anspruch 7 oder eines Kohleprobekerns, der durch ein Verfahren nach einem der Ansprüche 1 bis 6 erhalten wird, umfasst.

**9.** Verwendung eines Kohleprobekerns nach Anspruch 7 zur Messung des $CO_2$-Adsorptionsvermögens einer Kohleprobe.

**10.** Verwendung eines Kohleprobekerns nach Anspruch 7 zur Messung des Wasserdurchlässigkeit einer Kohleprobe.

**11.** Verwendung eines Kohleprobekerns nach Anspruch 7 zur Messung des Stickstoffdurchlässigkeit einer Kohleprobe.

**12.** Verwendung eines Kohleprobekerns nach Anspruch 7 zur Messung der Durchlässigkeit einer Kohleprobe für gasförmiges $CO_2$.

**13.** Verwendung eines Kohleprobekerns nach Anspruch 7 zur Messung der Durchlässigkeit einer Kohleprobe für superkritisches $CO_2$ einer Kohleprobe.

**Claims**

**1.** Method for preparing a coal core, comprising the steps of:

- measuring the void ratio of the sample used in step (i),
- (i) grinding the coal sample to obtain a powder with a granulometry between 0.1 and 800 $\mu$m,
- (ii) adding water to the powder obtained in step (i) so as to obtain a mix containing 20 to 30% water,
- (iii) placing the mix obtained at step (ii) in a mould,
- (iv) applying a pressure of more than 0.5 Mpa to the sample in said mould, in order to obtain a block,
- (v) applying to the block obtained in step (iv) an oedometric compression so as to obtain a sample with a void ratio similar to that of the coal from which the sample of step (i) is extracted,

and wherein the mix placed in said mould at step (iii) consists only of water and the powder obtained at step (i).

**2.** Method for preparing a coal core according to claim 1, wherein step (i) is performed with a roller mill.

**3.** Method for preparing a coal core according to any of the preceding claims, wherein the pressure applied at step (iv) is equal or superior to 1 Mpa.

**4.** Method for preparing a coal core according to any of the preceding claims, additionally comprising a step (iv') consisting of placing the block obtained at step (iv) in a cutting shoe suitable for use in an oedometric test.

**5.** Method for preparing a coal core according to any of the preceding claims, additionally comprising a step (v') consisting of removing the water in the core obtained at step (v).

**6.** Method for preparing a coal core according to any of the preceding claims, step (v') comprising a step consisting of circulating a gas flow through the coal core obtained at step (v).

**7.** Coal core obtained with a method according to any of claims 1 to 6.

**8.** Method for measuring the $CO_2$ adsorption capacity of a coal, comprising the use of a coal core according to claim 7 or obtained with a method according to any of claims 1 to 6.

**9.** Use of a coal core according to claim 7 to measure

the $CO_2$ adsorption capacity of a coal sample.

10. Use of a coal core according to claim 7 to measure the water permeability of a coal sample.

11. Use of a coal core according to claim 7 to measure the nitrogen permeability of a coal sample.

12. Use of a carbon coal according to claim 7 to measure the gaseous $CO_2$ permeability of a coal sample.

13. Use of a carbon core according to claim 7 to measure the supercritical $CO_2$ permeability of a coal sample.

**EP 2 510 330 B1**

## RÉFÉRENCES CITÉES DANS LA DESCRIPTION

**Documents brevets cités dans la description**

- US 2009295034 A